# EUROPEAN PATENT SPECIFICATION

(11) **EP 1 201 130 B1**
(45) Date of publication and mention of the grant of the patent: **03.01.2007**
(21) Application number: 00948035.1
(22) Date of filing: 28.07.2000
(51) Int. Cl.: A23B 7/16

(54) **PROCESS FOR APPLYING COATINGS TO FRUITS AND VEGETABLES, AND DEVICE FOR IMPLEMENTING SAME**
VERFAHREN ZUR BESCHICHTUNG VON FRÜCHTEN UND GEMÜSE, SOWIE EINE VORRICHTUNG ZUR DURCHFÜHRUNG
PROCEDE D'APPLICATION DE REVETEMENTS SUR LES FRUITS ET LEGUMES ET DISPOSITIF DE MISE EN OEUVRE

(30) Priority: 04.08.1999 ES 9901778
(43) Date of publication of application: 02.05.2002
(73) Proprietor: UNIVERSIDAD POLITECNICA DE VALENCIA, 46022 Valencia (ES)
(72) Inventor: ORTOLA ORTOLA, Maria Dolores, Camino de Vera, 46022 Valencia (ES); FITO SUNER, Pedro Jose, Camino de Vera, 46022 Valencia (ES); ASENSIO PERUGA, Sandra, Camino de Vera, 46022 Valencia (ES); FITO MAUPOEY, Pedro, Camino de Vera, 46022 Valencia (ES)
(74) Representative: Elzaburu Marquez, Alberto
(86) International application number: PCT/ES2000/000288
(87) International publication number: WO 2001/010230

(56) References cited:
- FR-A- 2 325 436
- US-A- 3 818 859
- US-A- 4 331 691
- US-A- 5 007 335

## Description

### BACKGROUND OF THE INVENTION

The use of films and coatings, whether edible or not, is a technique that is widely used in the food industry, primarily in the field of fruit and vegetables, which allows them to keep the appearance of fresh products and preserves then for longer.

After harvesting, as many foreign bodies as possible must be eliminated from the vegetable products. Therefore, the first step in the fresh treatment line is usually washing with water and detergent. In this operation, not only dust and fungi spores, but also part of the natural wax is rapidly eliminated, which makes the fruit more liable to weight loss due to sweating, which quickly causes it to age.

Due to this, since the beginning of the century the industrial application of coatings by means of spraying has been carried out, which attempt to restore the wax coating to the fruit which has been lost during washing and thus reduce weight loss due to dehydration and improve its appearance by increasing its shine (see e.g. US-A-3818 859). At the same time, it may be a vehicle for adding fungicides which allow fungal diseases to be controlled.

Currently, the main problem with this application is the difficulty in ensuring that each fruit receives a similar amount of product. This is basically due to two reasons:

The fruit does not advance at the same speed in the centre as it does next to the walls of the conveyor belt.

In many cases the amount of fruit that enters the applier per unit of time is not constant.

This lack of homogeneity in the treatment affects the physiology of the fruit and may give rise to alterations in the flavour and aroma of the same. In effect, the wax layer deposited on the fruit influences the gaseous exchange of the same with the atmosphere in its surroundings, since in addition to constituting a new surface coating, it penetrates into the stomas and pores of the fruit, stopping up the same. Consequently, respiration, basically aerobic, may be replaced to a greater or lesser extent by anaerobic respiration when the proportion of CO₂ increases and that of O₂ diminishes in its internal atmosphere. At the same time, the concentration of ethylene also increases when it is less able to be diffused through the skin of the fruit.

### DESCRIPTION OF THE INVENTION

The purpose of the invention which constitutes the object of this patent, consists of eliminating the problem of the lack of homogeneity in the treatment inherent in the processes of applying coatings by spraying, as described above, having been conceived and designed with regard to this objective as a priority.

The process being patented consists of using a set of rollers provided with controlled speed and an adequate surface adherence, which allows an exact amount of the product to be transferred from an auxiliary deposit to application brushes.

The amount of material transferred per unit of time may be controlled automatically by regulating the turning speed of the rollers and by controlling the temperature of the liquid contained in the auxiliary deposit.

The advantages offered by this process may be summarised as follows:

It allows the amount of material applied to be regulated more exactly.

It makes it possible to apply products with a higher concentration of active materials than those currently applied, which facilitates subsequent operations, such as drying, with the resulting energy savings, improvement in final quality of the product, etc.

It is possible to incorporate it into a compact apparatus which is controlled completely automatically and which carries out the pre-drying-covering-drying operations.

The application process protected by this patent is carried out by means of a device whose structure is made up of the following elements:

An application chamber which comprises the whole application system and acts as a support for the different elements.

Cylindrical brushes for applying the product to the fruit, activated by a geared engine which is susceptible to automatic variation of the turning speed, which allow the product to be distributed at the same time that they transfer it to the fruits or vegetables.

Intermediate rollers activated by a geared engine which is susceptible to automatic variation of the turning speed, which transport the product by direct contact and adherence from the auxiliary deposit in which they are partially submerged to the application brushes.

Auxiliary deposit of the product whose volume is kept constant by a recirculation system by means of overflows and feedback.

Electrical resistors situated in the lower part of the auxiliary deposit which allow the temperature of the product to be controlled.

Filter plate which prevents the deposit of solid material on the resistors.

### BRIEF DESCRIPTION OF THE DRAWINGS

To complement the description of the invention and to aid interpretation of the formal, structural and functional features of its object, it is accompanied by drawings in which different aspects of a preferred embodiment of the process and device for applying coatings to fruit and vegetables which constitutes the object of this patent are diagrammatically shown.

In said drawings:

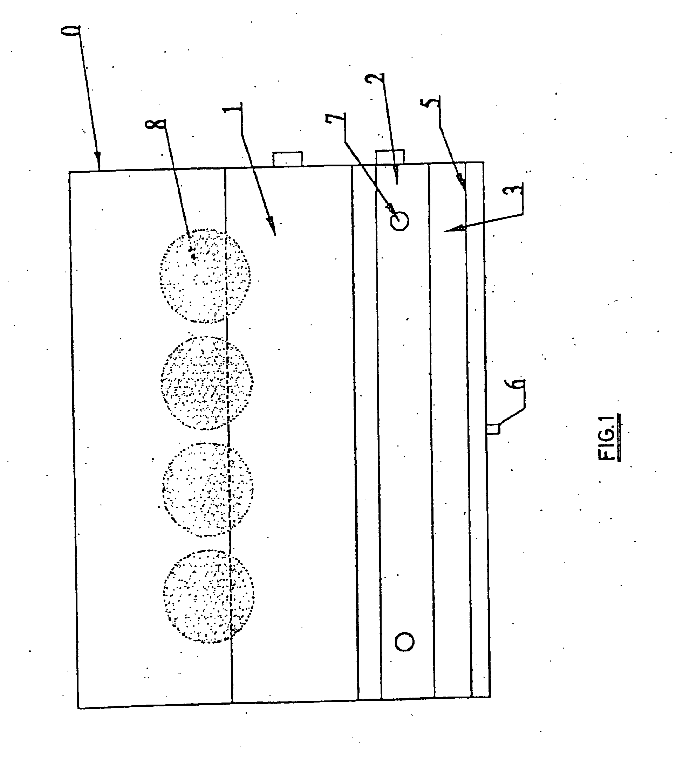

Figure 1 shows a side elevation of the device to carry out the process.

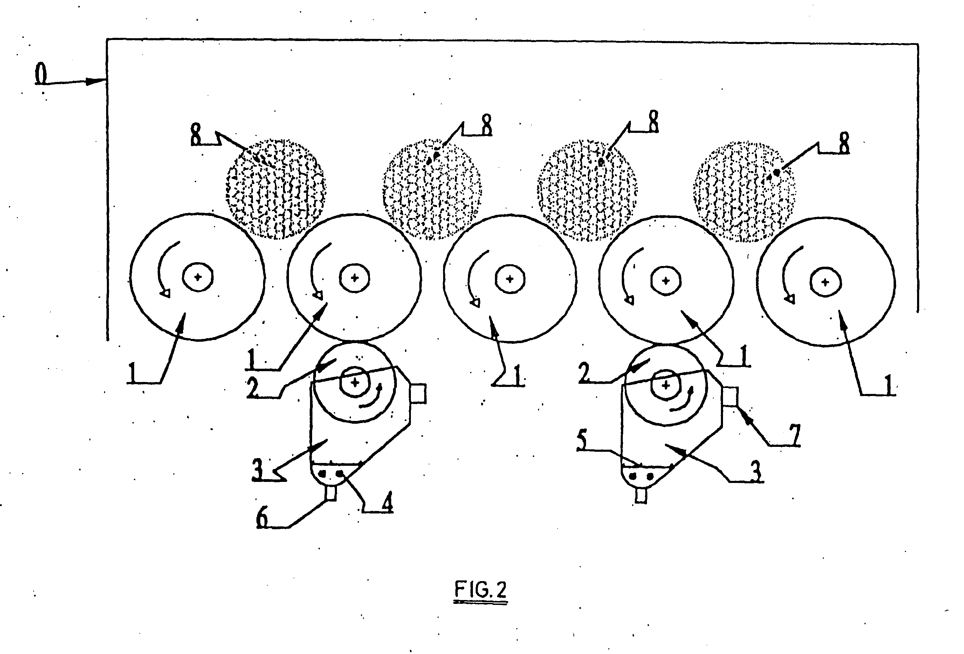

Figure 2 is a front elevation of the same device.

### DESCRIPTION OF A PREFERRED EMBODIMENT

In order clearly to show the nature and scope of the advantageous application of the process and device for applying coatings to fruit and vegetables, which constitutes the object of the invention, its operation and structure are described below, with reference to the drawings.

In the process, a set of rollers with controlled speed and an adequate surface adherence are used, which facilitate the transfer of an exact amount of product from an auxiliary deposit to cylindrical application brushes.

The amount of product transferred to the fruit and vegetables per unit of time may be automatically controlled by regulating the turning speed of the brushes and rollers and by controlling the temperature and viscosity of the liquid contained in the auxiliary deposit.

The structure of the device for carrying out the process consists of:

An application chamber (0) comprising the application device and acting as a support for the different elements.

Cylindrical brushes (1) for applying the product to the fruit (8), activated by a geared engine which is susceptible to automatic variation of the turning speed, which allow the product to be distributed at the same time that they transfer it to the fruit or vegetables.

Intermediate rollers (2), activated by a geared engine which is susceptible to automatic variation of the turning speed, which transport the product by direct contact and adherence from the auxiliary deposit (3) in which they are partially submerged to the application brushes (1).

Auxiliary deposit (3) of the product, whose volume is kept constant by a recirculation system by means of overflows (7) and feedback (6).

Electrical resistors (4) situated in the lower part of the auxiliary deposit (3) which allow the temperature and viscosity of the product to be controlled.

Filter plate (5) which prevents the deposit of solid materials on the resistors.

## Claims

1. A process for applying coatings to fruit and vegetables, **characterised** essentially in that it uses a set of rollers (2) with a controlled speed and adequate surface adherence, which facilitate the transfer of an exact amount of product from an auxiliary deposit (3) to cylindrical application brushes (1); the amount of product transferred to the fruit and vegetables (8) per unit of time may be controlled automatically, by regulating the turning speed of the brushes (1) and the rollers (2) and by controlling the temperature and viscosity of the product contained in the auxiliary deposit (3).

2. A device for carrying out the process protected in claim 1, **characterised** essentially in that its structure consists of:
An application chamber (0) comprising the whole application device and acting as a support for the different elements.
Cylindrical brushes (1) for applying the product to the fruit (8), activated by a geared engine which is susceptible to automatic variation of the turning speed, which allow the product to be distributed at the same time that they transfer it to the fruit or vegetables.
Intermediate rollers (2), activated by a geared engine which is susceptible to automatic variation of the turning speed, which transport the product by direct contact and adherence from the auxiliary deposit (3) in which they are partially submerged, to the application brushes (1).
Auxiliary deposit (3) of the product, whose volume is kept constant by a recirculation system by means of overflows (7) and feedback (6).
Electrical resistors (4) situated in the lower part of the auxiliary deposit (3) which allow the temperature and viscosity of the product to be controlled.
Filter plate (5) which prevents the deposit of solid materials on the resistors.

## Patentansprüche

1. Verfahren zum Aufbringen von Überzügen auf Früchte und Gemüse, **dadurch gekennzeichnet, dass** eine Gruppe von Rollen (2) mit gesteuerter Geschwindigkeit und angemessenem Oberflächenhaftvermögen eingesetzt wird, welche die Übertragung einer exakten Menge eines Erzeugnisses von einem Zusatz-Vorratsbehälter (3) auf zylindrische Auftragsbürsten (1) erleichtern; wobei die Menge des Erzeugnisses, die auf die Früchte und das Gemüse (8) pro Zeiteinheit übertragen wird, automatisch gesteuert werden kann, durch Einstellen der Umdrehungsgeschwindigkeit der Bürsten (1) und der Rollen (2), und durch Steuern der Temperatur und der Viskosität des Erzeugnisses, das sich in dem Zusatz-Vorratsbehälter (3) befindet.

2. Vorrichtung zur Durchführung des Verfahrens nach Anspruch 1, **dadurch gekennzeichnet, dass** ihre Konstruktion aufweist:
eine Auftragskammer (0), welche die gesamte Auftragsvorrichtung aufweist, und als Halterung für die unterschiedlichen Elemente dient;
zylindrische Bürsten (1) zum Auftragen des Erzeugnisses auf die Früchte (8), aktiviert durch einen Getriebemotor, der zur automatischen Änderung der Umdrehungsgeschwindigkeit ausgebildet ist, und welche es ermöglichen, dass das Erzeugnis zum gleichen Zeitpunkt verteilt wird, an welchem sie es auf die Früchte oder das Gemüse übertragen;
Zwischenrollen (2), die durch einen Getriebemotor aktiviert werden, der zur automatischen Änderung der Umdrehungsgeschwindigkeit ausgebildet ist, und welche das Erzeugnis durch direkten Kontakt und Anhaften von dem Zusatz-Vorratsbehälter (3), in welchen sie teilweise eingetaucht sind, auf die Auftragsbürsten (1) transportieren;
einen Zusatz-Vorratsbehälter (3) für das Erzeugnis, dessen Volumen durch ein Umwälzsystem mit Hilfe von Überläufen (7) und einem Rücklauf (6) konstant gehalten wird;
elektrische Widerstände (4), die in dem unteren Teil des Zusatz-Vorratsbehälters (3) angeordnet sind, und eine Steuerung der Temperatur und der Viskosität des Erzeugnisses ermöglichen; und
eine Filterplatte (5), welche die Ablagerung von Feststoffmaterialien auf den Widerständen verhindert.

## Revendications

1. Procédé d'application de revêtements sur des fruits et légumes, **caractérisé** essentiellement par l'utilisation d'un ensemble de rouleaux (2) à une vitesse commandée et avec une adhérence de surface appropriée facilitant le transfert d'une quantité exacte de produit à partir d'un réservoir auxiliaire (3) vers des brosses d'application cylindriques (1), la quantité de produit transférée sur les fruits et légumes (8) par unité de temps pouvant être commandée automatiquement en régulant la vitesse de rotation des brosses (1) et des rouleaux (2) et en commandant la température et la viscosité du produit contenu dans le réservoir auxiliaire (3).

2. Dispositif destiné à mettre en oeuvre le procédé selon la revendication 1, essentiellement **caractérisé en ce que** sa structure est constituée par :
une chambre d'application (0) comprenant tout le dispositif d'application et servant de support aux différentes éléments,
des brosses cylindriques (1) destinées à l'application du produit sur les fruits (8) et entraînées par un motoréducteur dont la vitesse de rotation peut varier automatiquement, ce qui permet de distribuer le produit tout en le transférant sur les fruits et les légumes,
des rouleaux intermédiaires (2), qui sont entraînés par un motoréducteur dont la vitesse de rotation peut varier automatiquement et qui transportent le produit par contact direct et adhérence du réservoir auxiliaire (3), dans lequel lesdits rouleaux intermédiaires sont partiellement immergés, vers les brosses d'application (1),
un réservoir auxiliaire (3) qui est destiné au produit et dont le volume est maintenu constant par un système de remise en circulation à l'aide de moyens de débordement (7) et de retour (6),
des résistances électriques (4) qui sont placées dans la partie inférieure du réservoir auxiliaire (3) et qui permettent de commander la température et la viscosité du produit,
des plaques de filtrage (5) qui empêchent le dépôt de matières solides sur les résistances.
